(19)

Europäisches
Patentamt
European
Patent Office
Office européen
des brevets

(11) **EP 2 565 167 A2**

(12) **EUROPEAN PATENT APPLICATION**

(43) Date of publication:
**06.03.2013 Bulletin 2013/10**

(51) Int Cl.:
**C03B 19/06** $^{(2006.01)}$

(21) Application number: **12182325.6**

(22) Date of filing: **30.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.08.2011 US 201161529542 P**

(71) Applicant: **Corning Incorporated
Corning, New York 14831 (US)**

(72) Inventor: **Annamalai, Sezhian
Painted Post, NY New York 14870 (US)**

(74) Representative: **Anderson, James Edward George
et al
Elkington and Fife LLP
Prospect House
8 Pembroke Road
Sevenoaks, Kent TN13 1XR (GB)**

(54) **Method of making a silica-titania glass having a ternary doped critical zone**

(57) In one aspect the disclosure is directed to the preparaton of a binary silica-titania glass blank having a CTE of $0 \pm 30$ ppb/°C or less over a temperature range of 5°C to 35°C, and a doped silica-titania glass critical zone, wherein the dopant(s) are selected from the group consisting of aluminum oxide, and transition metal oxides, and amount of the dopant(s) is in the range of 0.05 wt.% to 8 wt.%. In various embodiments the dopants are selected from the group consisting of 0.25 wt.% to 8 wt. % $Al_2O_3$, 0.05 wt.% to 3 wt.% $Nb_2O_5$, and 0.25 wt.% to 6 wt.% $Ta_2O_5$, and mixtures thereof.

A method of making such a doped slica-titania glass comprises preparing a slurry from silica-titania powder and dopandt powders, spray drying the slurry to obtain free-flowing fine particles, shaping and pressing / heating.

Figure 1

EP 2 565 167 A2

**Description**

Priority

This application claims the benefit of priority under 35 U.S.C. § 119 of U.S. Provisional Application Serial No. 61/529542 filed on August 31, 2011 the content of which is relied upon and incorporated herein by reference in its entirety.

Background

Extreme Ultra Violet Lithography (EUVL) is the leading lithography technology for 22nm node and lower, for example, systems using the 13-15nm wavelength extreme ultra violet radiation, for integrated circuits (ICs) like Micro Processing Unit (MPU), Flash memory and Dynamic Random Access Memory (DRAM) articles. The advantages of using a silica-titania glass, for example, ULE® glass (Coming Incorporated, Coming, New York), for EUVL system components, for example, the mirrors or partially reflective projection optics, are the polishability of the glass to the required finish or surface roughness; CTE (coefficient of thermal expansion) control of the glass and the glass's dimensional and radiation stability. These properties are critical to the functioning of the EUVL systems. Even though the current EUVL steppers use the ULE® glass, the specifications for this glass are constantly being tightened as the power of the source radiation increases, from the current 5W to the required 100W. While advances have been made in improving the required properties of this glass, further improvements are necessary for certain parameters such as the tolerance value for Tzc (zero crossover temperature), CTE vs. Temperature slope and Tzc spatial homogeneity. The present disclosure is directed to a method of making a doped silica-titania glass article that has the required improvements in these properties and is suitable for use in below 25nm node lithography as an element of the system as well as other applications requiring these superior properties.

Summary

The present disclosure is directed to methods of making a doped silica-titania glass, the glass being defined herein as a glass consisting of silica, titania and one or more of the selected dopants as described herein. In particular the methods can be used to make a doped silica-titania glass that can be used in below 25nm node EUV lithographic systems. The basic components of the glass are silica, titania and one or more dopants. In one embodiment the silica-titania powder and the dopants are mixed to form a slurry and the slurry is then spray dried to form a free flowing powder containing silica, titania and the dopants. In another embodiment a silica precursor, a titania precursor and precursors for the dopants are mixed to form a slurry and the slurry is then spray dried to form a free-flowing powder. In a further embodiment a silica precursor, a titania precursor and precursors for the dopants are mixed and fed to a burner where they are combusted and oxidized in air (flame hydrolysis) to form a doped silica-titania powder, Alternatively a silica precursor, a titania precursor and precursors for the dopants are separately fed to a manifold in the form of liquid or vapor where they are mixed and the mixture is then fed to one or a plurality of burners where it is combusted and oxidized in a fuel/air mixture to form a doped silica-titania powder. In each of the above embodiments the powder that is formed is then made into a glass using a method selected from the group consisting of:

(a) mixing the powder with a temporary organic binder, shaping it by uniaxial pressing and or cold isostatic pressing ("CIP") and then consolidating the shaped part at the required temperature to form a consolidated doped silica-titania glass blank;
(b) hot pressing the powder or uniaxially/cold isostatically pressed part at the required pressure and temperature to form a consolidated doped silica-titania glass blank; and
(c) hot isostatic pressing the powder or uniaxially/cold isostatically pressed part at suitable pressure and temperature to form a consolidated doped silica-titania glass blank.

The methods of this disclosure are capable of producing a large number of small parts in a cost effective manner compared to sol-gel or soot blank processes. In addition the uniformity of both Ti and the dopant(s) distribution in the final consolidated glass blank can be ensured to a high degree. The processes described herein are extremely flexible and can be used to make glasses having different ternary dopants or combinations of dopants as well as different concentration levels of dopants. The doped silica-titania glasses described herein have advantages over a binary silica-titania glass. The advantages include having better polishability and lower striae apart from lower CTE slope and Tzc homogeneity. The processes described herein can also be used to make photomask blanks for EUVL applications. In addition, the glass blanks made according to the methods described herein can be used to form a doped silica-titania glass article that can be used to form the critical zone of the large mirrors used in EUV lithography. The doped silica-titania glass article would be shaped and fusion bonded into a cavity formed in the critical zone in a larger binary silica-titania glass article. These parts would form the critical zone of the Projection Optics mirror parts of a EUVL stepper and can be fusion bonded to the regular Corning ULE® block.

In the methods described herein it has been discovered that the addition of a selected ternary dopant or combinations of them in the amount of 0.05-6 wt.% to the binary silica-titania glass results in a smaller CTE vs. Temperature slope, which is a critical requirement for the glass to be used in making projection optics parts for EUVL steppers as well as other EUVL system components. The critical zone of these projection optics parts can be made out of this and that the critical zone doped silica-titania glass can be polished to the required smoothness necessary for below 25nm node EUV lithography element. The dopant(s) are selected from the group consisting of aluminum oxide and transition metal oxides and are added to the binary silica-titania glass. During the course of seeking improvements in the polishability of low CTE glass we discovered that the addition of a selected amount of a selected dopant or combination of them to a binary silica-titania glass such as ULE® glass (Coming Incorporated) would enable one to achieve the required CTE slope specification for below 25nm node EUVL stepper parts. This will also help in achieving Tzc spatial homogeneity requirements.

In one aspect the disclosure is directed to a method of making a silica-titania glass containing a ternary dopant selected from the group consisting of aluminum oxide, and selected transition metal oxides. The amount of the dopant is in the range of 0.05 wt.% to 8 wt.%. In various embodiments the ternary dopant is selected from the group consisting of 0.25 wt.% to 8 wt.% $Al_2O_3$, 0.05 wt.% to 3 wt.% $Nb_2O_5$, and 0.25 wt.% to 6 wt.% $Ta_2O_5$ or a combination of them.

In addition to its use in making mirror blanks for EUV lithography, the ternary silica-titania-dopant glass described herein can also be used to make photomask blanks for use in any lithographic process, for example, 248nm and 193nm and 157nm lithography as well as below 25nm node EUVL as well as many other applications requiring these superior properties.

Brief Description of the Drawings

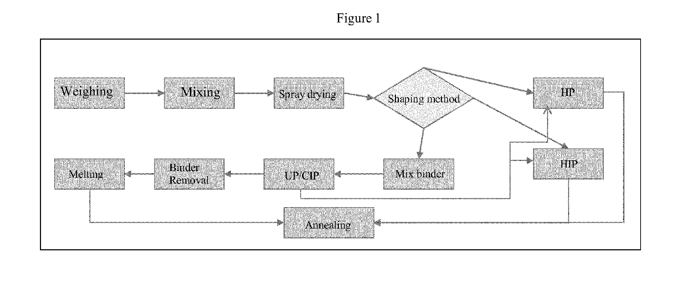

Figure 1 is a flow chart illustrating the methods of making a doped silica-titania glass and annealing the glass.

Figure 2 is an oblique top view illustrating a typical EUVL element or blank 10 and the critical zone 12 of the element or blank.

Figure 3 is an oblique side view of a cross section of a EUVL element or blank 10 made of a binary silica-titania glass showing the critical zone 12 of the binary silica-titania glass element.

Figure 4 is an oblique side view of a cross section of a EUVL element or blank 10 with a doped silica-titania glass 14 inserted in the element/blank 10, and further illustrating in the critical zone 12 of the insert that has been bonded to the element/blank 10, with the bonding area of insert 14 being illustrated by the heavy black lines 16.

Detailed Description

Herein the terms "binary silica-titania glass" and "silica-titania glass" mean a glass consisting essentially of silica and titania. Also herein the terms "doped silica-titania glass," "silica-titania-dopant(s) glass," "doped glass," and similar terms, mean a glass consisting of silica, titania and one or more of the selected dopants as described herein. In addition, while the use of the silica-titania-dopants inserts described herein is for use as an insert with a binary silica-titania glass blank or substrate, the doped glass can also be used as an insert with other materials, for example, glass-ceramics, that have a compatible CTE, that is, the insert and the material into which it is inserted have substantially equivalent CTE values in a selected temperature range. In an embodiment the doped silica-titania glass can be used by itself for the entire element.

Presently the largest mirror blanks are approximately 122cm (~48 inches) in diameter and approximate 23cm (~9 inches) thick. While it is possible to make a large EUVL mirror elements containing silica, titania and one or more selected dopants as described herein using methods such as the soot blank process and sol-gel process, these routes could prove difficult and could possibly take a considerable amount of development time to insure that the components were uniformly distributed through the large silica-titania-dopants glass. However, since the critical zone in these large elements is less than the diameter of either the mirror blank or finished mirror, and the thickness of the critical zone is less than approximately 3cm, we have found that the use of an "insert of a silica-titania-dopants glass" can provide the required polishability in the critical zone and have also found methods by which a silica-titania-dopants glass insert can be made that meets the tighter specifications required for below 25nm node lithography.

The basic components of the glass are silica, titania and one or more dopants. In one embodiment the silica-titania powder and the dopants are mixed with a solvent to form a slurry and the slurry is then spray dried to form a free flowing powder containing silica, titania and the dopants. In one embodiment the dopants are in a form that can be dissolved in the solvent before mixing with the powder. In another embodiment a silica precursor, a titania precursor and the dopant precursors are mixed to form a slurry and the slurry is then spray dried to form a free-flowing powder. In a further embodiment a silica precursor, a titania precursor and the dopant precursors are mixed and fed to at least one burner where they are combusted and oxidized in air to form a silica-titania- dopants powder. Alternatively the vapors of a silica precursor, a titania precursor and the dopant precursors are separately fed to a manifold where they are mixed and the mixture is then fed to one or a plurality of burners where it is combusted and oxidized in a fuel/air mixture to form a silica-titania- dopants powder. In each of the above embodiments the powder that is formed is then made into a glass using a method selected from the group consisting of:

(a) mixing the powder with a temporary organic binder, shaping it by uniaxial pressing and /or cold isostatic pressing ("CIP") and then consolidating the shaped part at the required temperature to form a consolidated silica-titania dopants glass blank;
(b) hot pressing ("HP") the powder or a uniaxially pressed or CIPed part at the required pressure and temperature to form a consolidated silica-titania-dopants glass blank; and
(c) hot isostatic pressing ("HIP") the powder or uniaxially pressed or the CIPed part at suitable pressure and temperature to consolidate and form a consolidated silica-titania-dopants glass blank.

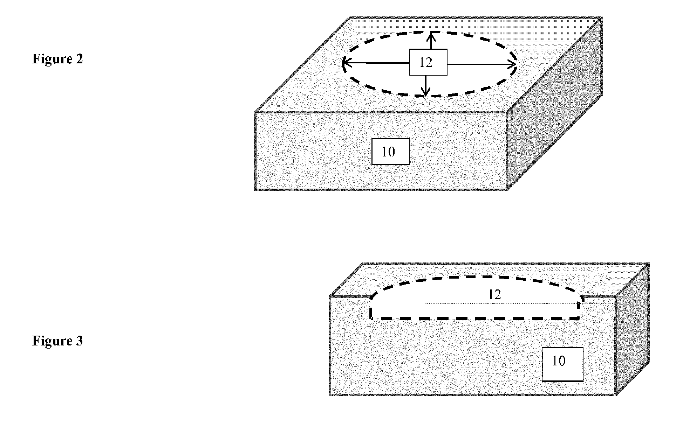

Figure 2 is an oblique top view illustrating a typical EUVL element or blank and the critical zone 12 of the element of the element or blank in which radiation imposes. In the present disclosure an insert is placed in the blank 10.

Figure 3 is an oblique side view of a cross section of a EUVL element or blank 10 made of a binary silica-titania glass showing the critical zone 12 of the binary silica-titania glass element. The view illustrates that the thickness of the critical zone 12 is much less than the thickness of the blank/element and hence the insert will have a depth that is less than that of the blank/element 10. As indicated above the thickness or depth of the critical zone is generally less than 3cm. The thickness of the element/ blank is sized accordingly, and it can be adjusted as needed should it be found that the thickness of the critical zone is greater or smaller than expected.

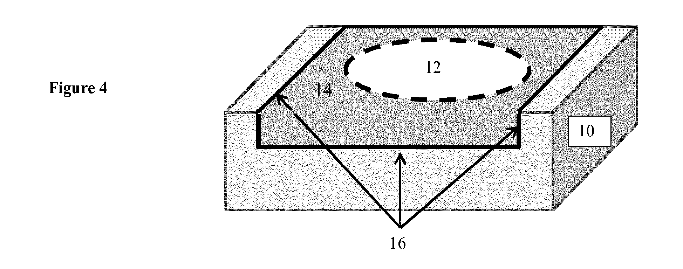

Figure 4 is an oblique side view of a cross section of a EUVL element or blank 10 with a doped silica-titania glass 14 inserted into the element/blank 10. The critical zone 12 is illustrated by the circle 12 (dashed line) that lies within the boundaries of the insert 14. Figure 3 also shows the bonding between the insert 14 and the blank 10 as the heavy black lines 16 along the boundary areas between these two parts.

The critical zone of an element is the area upon which the radiation impinges. For EUVL which uses a 13.5nm radiation all the materials absorb the radiation to different degrees, that is, some materials are more absorbent of the radiation than others, and hence get heated up. Hence the impingement of the EUV radiation can cause heating of the critical zone. Additionally the critical zone will not be uniformly radiated, but will be irradiated according to the pattern that is being written on the ICs (integrated circuits). This leads to non-uniform heating of the mirror element. Heat from the critical zone can be transferred by conduction from the critical zone to adjacent areas of the element. However, the conductive transfer of heat results in different areas of the element being at different temperatures. As a result the actual CTE at different points of the element may lie at different values on the CTE curve. The significance of this is that if an element is made of a single material and is annealed to a selected Tzc value, the heating of the mirror may cause deviations from zero CTE in the critical zone where the radiation impinges. Consequently, the slope of the CTE vs. T curve needs to be improved so that even if the different parts of the mirror substrate are at different temperatures, their CTE values are not very different from each other and resulting minimum distortion of the mirror and subsequently the circuit being written on the chips.

The present disclosure is directed to the preparation of a dopant(s)-silica-titania glass for use in the area of a silica-titania glass element termed the "critical zone." In particular, it has been discovered that the addition of one or more selected dopants in the amount of 0.05-8 wt.% to the silica-titania glass results in an improved silica-titania glass containing at least one dopant as described herein that is suitable for lithography below 198nm, and in particular for EUV lithography. The dopants are selected from the group consisting of transition metal oxides and aluminum oxide that is added to the silica-titania glass constituting the critical zone or other glass articles requiring these superior properties.

Silica-titania substrates are specified within a very narrow range for the value of the average zero CTE crossover temperature, Tzc. While Tzc can be controlled by glass composition, which is defined at the time of glass forming, it can also be affected by the thermal history of the glass. Commonly owned U.S. Patent Application Publication Nos. 2011-0043787 and 2011-0048075 disclose a "Photoelastic Method for Absolute Determination of Zero CTE Crossover in Low expansion Silica-Titania Glass Samples" and "Tuning Tzc by the Annealing of Ultra Low Expansion Glass," respectively. Control of the composition during the glass forming stage is not always sufficiently accurate such that a particular sample or boule of glass will satisfy the glass requirements for a certain part if the specification for Tzc is too narrow. For example, in combustion processes where silica-containing and titanium-containing feed stocks are fed (mixed or not mixed) into burners, combusted into silica and titania oxides, deposited in a vessel and formed into a glass, the plugging of the burners (partial or complete in one or more burners) or variations in pump rates (perhaps due to a voltage variation or other pump problem) can cause some variations in the formed glass composition. In addition, while annealing after a binary glass part has been formed can improve the CTE slope by approximately 20%, this may not be sufficient and further adjustment of CTE slope may be necessary. The use of dopants has been found to be enabling of additional improvement in the CTE slope.

In one aspect the disclosure is directed to a substrate for making mirrors that can be used in EUVL steppers to make circuits that have a feature size of 22nm node or less, the node being half the distance between adjacent features in a circuit. Currently EUVL (extreme ultraviolet lithography) uses 13.5 nm radiation for this purpose. (thus care should be taken to use the same unit, nanometers (nm)). The substrate of the present disclosure that can be used for mirrors suitable for EUVL consists of a glass, glass ceramic or ceramic having a low coefficient of thermal expansion and an insert in the critical zone of the substrate. In one embodiment the substrate into which the insert is placed is a binary silica-titania glass having a CTE of $0 \pm 30$ ppm/°C over a temperature range of 5°C to 35°C, the insert consisting of a silica-titania-dopant(s) glass, wherein the dopant(s) are selected from the group consisting of aluminum oxide and selected transition metal oxides and amount of the dopant(s) is in the range of 0.05 wt.% to 8 wt.%. In various embodiments the dopant(s) are selected from the group consisting of 0.25wt.% to 8 wt.% $Al_2O_3$, 0.05 wt.% to 3 wt.% $Nb_2O_5$, and 0.25 wt.% to 6 wt.% $Ta_2O_5$, and mixtures thereof.

The doped silica-titania glass described herein can also be used to make photomask blanks for use in any lithographic process, for example, 248nm and 193nm and 157nm lithography as well as below 25nm node lithography and many other applications requiring these superior properties.

Silica-titania glasses suitable for use in EUV lithography are typically a binary silica-titania glass having a composition in the range of 5-9 wt.% titania and 91-95 wt.% silica and a CTE of less than or equal to $0 \pm 30$ ppb/°C over a temperature range of 5°C to 35°C. In one embodiment the range is 6-8 wt.% titania and 94-92 wt.% silica and the CTE is less than or equal to $0 \pm 30$ ppb/°C over a temperature range of 5°C to 35°C. In making the doped silica-titania glass it is important that the doped silica-titania glass have a CTE that is substantially the same, that is a CTE of less than or equal to $0 \pm 30$ ppb/°C over a temperature range of 5°C to 35°C, but an improved slope of the CTE vs. temperature curve for use in below 25nm node lithography. Consequently, it has been found that in the doped silica-titania glass, the silica and titania content should be adjusted to account for the addition of the dopant(s) such that $SiO_2/TiO_2$ ratio remains substantially constant relative to that of a binary silica-titania glass within the composition range of 5-9 wt.% titania and 91-95 wt.% silica, particularly when the doped glass will be used as in insert in the critical zone of the binary glass.

By way of illustration, if the binary silica-titania glass having a composition in the range of (a) 94 wt.% silica and 6 wt.% titania, with a $SiO_2/TiO_2$ ratio of approximately 15.7, to (b) 92 wt.% silica and 8 wt.% titania, with a $SiO_2/TiO_2$ ratio of approximately 11.5, and the insert consists 0.05 wt.% to 8 wt.% of the dopants selected from the group consisting aluminum oxide, and transition metal oxides, and the silica and titania wt.% values of the doped glass are for the wt.% of dopants added to the glass, the adjustment being such that the $SiO_2/TiO_2$ ratio remains substantially unchanged. For example, if the binary glass has a composition of 94 wt.% silica and 6 wt.% titania totaling 100 wt.% silica plus titania, the addition of 3 wt.% dopants reduces the total silica plus titania content to 97 wt.%. As a result the silica and titania content of the doped glass would be reduced by a factor of 97/100 or 0.97. Thus the silica content in the doped glass would be 94 x 0.97 or 91.2 wt.%, and the titania content in the doped glass would be 6 x 0.97 or 5.8 wt.% titania. However, the $SiO_2/TiO_2$ ratio remains substantially unchanged:

$$(91.2 \text{ wt.\% } SiO_2) \div (5.8 \text{ wt.\% } TiO_2) = 15.7 \ SiO_2/TiO_2;$$

and

$$(94 \text{ wt.\% } SiO_2) \div (6 \text{ wt.\% } TiO_2) = 15.7 \ SiO_2/TiO_2.$$

If the 92 wt.% silica and 8 wt.% titania composition were adjusted for the addition of the 3 wt.% dopant(s) the resulting doped glass would contain 3 wt.% dopant(s), 89.2 wt.% $SiO_2$ and 7.8 wt.% $TiO_2$, and the $SiO_2/TiO_2$ ratio would be 11.4. The importance of the foregoing calculations is that regardless of the amount of dopant added, the silica and titania content has to be adjusted so that the $SiO_2/TiO_2$ ratio remains relatively constant between the glass with and without the added dopants. In an embodiment the blank material is a binary silica-titania having a composition in the range of 91-95 wt.% $SiO_2$ and 5-9 wt.% $TiO_2$ and a critical zone consisting of a silica-titania-dopant(s) glass containing 0.05 wt.% to 8 wt.% dopant(s) and a silica and titania content adjusted such that the $SiO_2/TiO_2$ ratio of the silica-titania-dopant(s) glass remains relatively constant with regard to the binary glass composition.

In one embodiment the disclosure is directed to a method of making a doped silica-titania glass, the method comprising the steps of weighing out a selected weight of a silica-titania powder and selected weights of the dopant powders or weighing out a selected weight of pre-made doped silica-titania powder; mixing the silica-titania powder and the selected dopant powders or the pre-made doped silica-titania powder and forming a slurry of the mixed powders using a selected fluid; spray drying this slurry to form a powder containing free-flowing fine particles having a size of approximately 200 $\mu$m diameter or less; shaping the powder into a form by uniaxial pressing and then further by cold isostatic pressing; alternatively the powder can be shaped directly by cold isostatic pressing and consolidating the shaped article by hot pressing, into a doped silica-titania glass blank; alternatively the powder can be directly consolidated by hot pressing and annealing the glass blank.

In another embodiment the disclosure is directed to a method of making a doped silica-titania glass, the method comprising the steps of weighing out a selected weight of a silica-titania powder and the selected weights of dopant powders or weighing out a selected weight of pre-made doped silica-titania powder; mixing the silica-titania powder and the selected dopant powders or the pre-made doped silica-titania powder and forming a slurry of the mixed powders using a selected fluid; spray drying the slurry to form a powder consisting of free-flowing fine particles having a size of approximately 200 $\mu$m diameter or less; shaping the powder into a form by uniaxial pressing and then further by cold isostatic pressing; alternatively the powder can be shaped directly by cold isostatic pressing and hot isostatic pressing the form, with consolidation, into a doped silica-titania glass blank; alternatively the powder can be directly consolidated by hot isostatic pressing and annealing the glass blank.

In a further embodiment the disclosure is directed to a method of making a doped silica-titania glass, the method comprising the steps of weighing out a selected weight of a silica-titania powder and the selected weights of the dopant powders or weighing out a selected weight of pre-made doped silica-titania powder; mixing the silica-titania powder and the selected dopant powders or the pre-made doped silica-titania powder and forming a slurry of the mixed powders using a selected fluid; spray drying the slurry to form a powder consisting of free-flowing fine particles having a size of approximately 200 $\mu$m diameter or less; mixing the powder with a temporary binder; shaping the particle into a form by uniaxial pressing and then further by cold isostatic pressing; alternatively the powder can be shaped directly by cold isostatic pressing; heating the shaped form to a temperature sufficient to remove the binder; sintering and consolidating the form into a doped silica-titania glass blank; and annealing the glass blank. The amount of binder will depend on the specific binder that is used in the method and the pressure that is used for cold isostatic pressing (CIP). The mold that is used for the CIP is designed taking into account shrinkage during sintering and consolidation, and final article size that is required. The powder or the form shaped by uniaxial pressing is filled into the mold and then the mold is introduced into the CIP chamber and the required pressure is applied to compact the powder. The CIPed shape then is heat treated for binder bum-out, in a temperature in the range of 750-850°C, is typically carried out at 800°C. The sample is slowly heated so that it maintains its integrity throughout the process without any cracks forming. The critical temperatures can be identified by TGA/DTA.

After the burnout, the sample is consolidated. The temperature required for consolidation of silica-titania glass is in the 1600-1750°C range. A typical temperature is 1670°C, and the sintering needs to be done in flowing He atmosphere, usually in an electrically heated furnace in a muffle box (Pt or alumina).

Additionally, regarding hot pressing (HP), the spray dried powder or even the burnt out sample described above can be used for HP. Hot pressing will yield near net shape blanks. The pressure, temperature and atmosphere required for HP will be dictated by the dopant type and concentration.

Regarding hot isostatic pressing (HIP), the spray dried powder (without any binder) or the CIPed and burnt out sample can be used in this process. The pressure, temperature and atmosphere required will be dictated by the dopant type and concentration. The main advantage of the HIP process is that inert gas (typically Ar) is used to apply the pressure and due to the applied pressure, consolidation temperature is much lower compared to conventional sintering.

Regarding annealing, the sintered glass parts can be annealed by the conventional methods - time and temperatures described in the art.

While typical embodiments have been set forth for the purpose of illustration, the foregoing description should not be deemed to be a limitation on the scope of the disclosure or the appended claims. Accordingly, various modifications, adaptations, and alternatives may occur to one skilled in the art without departing from the spirit and scope of this disclosure or the appended claims.

## Claims

1. A method of making a doped silica-titania glass, the method comprising the steps of:

    weighing out a selected weight of a silica-titania powder and the selected weights of the ternary dopant powders or weighing out a selected weight of pre-made doped silica-titania powder;
    mixing the silica-titania powder and the selected doped powder or the pre-made doped silica-titania powder and forming a slurry of the mixed powders' using selected fluid;
    spray drying the slurry to form a powder containing free-flowing fine particles having a size of approximately

200 μm diameter or less;

shaping the powder into a form by uniaxial pressing and then further by cold isostatic pressing; alternatively the powder can be shaped directly by cold isostatic pressing and hot pressing the form or the powder directly, with consolidation, into a doped silica-titania glass blank; and annealing the glass blank.

2. The method according to claim 1, wherein one or more dopants are selected from the group consisting of aluminum oxide, and selected transition metal oxides.

3. The method according to claim 2, wherein the dopant is aluminum oxide in an amount in the range of 0.25 wt.% to 8 wt.%

4. The method according to claim 2 wherein the dopant is selected from the group consisting of 0.05wt% to 3 wt.% $Nb_2O_5$, and 0.25 wt.% to 6 wt.% $Ta_2O_5$.

5. A method of making a doped silica-titania glass, the method comprising the steps of:

weighing out a selected weight of a silica-titania powder and the selected weights of dopant powder(s) or weighing out a selected weight of pre-made doped silica-titania powder;

mixing the silica-titania powder and the selected dopant powders or the pre-made doped silica-titania powder and forming a slurry of the mixed powders using a selected fluid;

spray drying the slurry to form a powder consisting of free-flowing fine particles having a size of approximately 200 μm diameter or less;

shaping the powder into a form by uniaxial pressing and then further by cold isostatic pressing; alternatively the powder can be shaped directly by cold isostatic pressing and hot isostatic pressing the form or the powder directly, with consolidation, into a doped silica-titania glass blank; and annealing the glass blank.

6. The method according to claim 5, wherein the dopants are selected from the group consisting of aluminum oxide, and selected transition metal oxides.

7. The method according to claim 6, wherein the dopant is aluminum oxide in an amount in the range of 0.25 wt.% to 8 wt.%

8. The method according to claim 6 wherein the dopants are selected from the group consisting of 0.05 wt.% to 3 wt.% $Nb_2O_5$, and 0.25 wt.% to 6 wt.% $Ta_2O_5$.

9. A method of making a doped silica-titania glass, the method comprising the steps of:

weighing out a selected weight of a silica-titania powder and the selected weights of the dopant powders or weighing out a selected weight of pre-made doped silica-titania powder;

mixing the silica-titania powder and the selected dopant powders or the pre-made doped silica-titania powder and forming a slurry of the mixed powders using a selected fluid;

spray drying the slurry to form a powder containing free-flowing fine particles having a size of approximately 200 μm diameter or less;

mixing the powder with a temporary binder;

shaping the particle into a form by uniaxial pressing and then further by cold isostatic pressing; alternatively the powder can be shaped directly by cold isostatic pressing;

heating the shaped form to a temperature sufficient to remove the binder,

sintering and consolidating the form into a doped silica-titania glass blank; and

annealing the glass blank.

10. The method according to claim 9, wherein the dopants are selected from the group consisting of aluminum oxide, and selected transition metal oxides.

11. The method according to claim 10, wherein one of the dopants is aluminum oxide in an amount in the range of 0.25 wt.% to 8 wt.%

12. The method according to claim 10 wherein one of the dopants is selected from the group consisting of 0.05 wt.% to 3 wt.% $Nb_2O_5$, and 0.25 wt.% to 6 wt.% $Ta_2O_5$.

Figure 1

Figure 2

Figure 3

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61529542 A
- US 20110043787 A
- US 20110048075 A